# FASCICULE DE BREVET EUROPEEN

(11) **EP 1 507 676 B1**
(45) Date de publication et mention de la délivrance du brevet: **19.03.2008**
(21) Numéro de dépôt: 03755177.7
(22) Date de dépôt: 21.05.2003
(51) Int. Cl.: B60J 7/14

(54) **TOIT RIGIDE REPLIABLE POUR VEHICULE AUTOMOBILE AVEC DISPOSITIF DE CENTRAGE**
HARTFALTDACH FÜR KRAFTFAHRZEUG MIT EINER ZENTRIERVORRICHTUNG
HARD FOLDING ROOF FOR A MOTOR VEHICLE WITH A CENTERING DEVICE

(30) Priorité: 24.05.2002 FR 0206381
(43) Date de publication de la demande: 23.02.2005
(73) Titulaire: Société Européenne de Brevets Automobiles, 75011 Paris (FR)
(72) Inventeur: QUEVEAU, Gérard, 79140 Le Pin (FR); DESCHATRES, Bernard, 79300 Bressuire (FR)
(74) Mandataire: Geismar, Thierry
(86) Numéro de dépôt international: PCT/FR2003/001533
(87) Numéro de publication internationale: WO 2003/099600

(56) Documents cités:
- DE-A- 4 326 291
- DE-A- 10 023 864
- FR-A- 2 814 137

## Description

La présente invention a pour objet un toit rigide repliable pour véhicule automobile et plus particulièrement un tel toit repliable d'une position où il recouvre l'habitacle du véhicule à une position où il est rangé dans le coffre du véhicule, ce toit comporte deux éléments adjacents longitudinalement, le bord arrière d'un premier élément étant articulé au bord avant d'un deuxième élément.

On connaît de tels véhicules dans lesquels différents dispositifs permettent de replier les éléments de toit rigides de manière qu'ils viennent se superposer en position d'ouverture de l'habitacle dans le coffre arrière du véhicule.

Dans la position où le toit est fermé, il est nécessaire de centrer convenablement l'un par rapport à l'autre les deux éléments de toit afin d'éviter toute vibration dans la direction perpendiculaire au plan de symétrie du véhicule.

Le document FR-A-2 814 137 se propose de résoudre ce problème par un doigt solidaire de l'un des éléments susceptibles de s'engager lorsque le toit est en positon de fermeture dans un évidement réalisé dans l'autre élément.

Un inconvénient d'un tel agencement est de requérir des tolérances très faibles sur les dimensions respectives du doigt et de l'évidement ainsi que sur leur position de montage sur leur élément respectif.

En outre même avec de telles tolérances, l'engagement du doigt dans l'évidement nécessite un certain jeu qui ne permet pas de donner une solution parfaite au problème posé.

La présente invention vise à pallier ces inconvénients.

Plus particulièrement, l'invention a pour but de fournir un toit rigide repliable dans lequel lorsque le toit est dans sa position de fermeture les deux éléments du toit sont centrés sans jeu l'un par rapport à l'autre.

A cet effet, l'invention a tout d'abord pour objet un toit rigide de véhicule automobile repliable d'une position où il recouvre l'habitacle du véhicule à une position où il est rangé dans le coffre du véhicule, comportant au moins deux éléments adjacents longitudinalement, le bord arrière d'un premier élément étant articulé au bord avant d'un deuxième élément, caractérisé par le fait qu'il comprend au moins deux paires de cales de centrage, une première cale de chaque paire de cales étant montée au voisinage du bord arrière du premier élément et la deuxième cale de chaque paire de cales étant montée au voisinage du bord avant du deuxième élément en vis-à-vis de la première cale, la première cale comportant une surface de butée arrière agencée pour coopérer avec une surface de butée avant de la deuxième cale lorsque le toit est dans sa position où il recouvre l'habitacle du véhicule, les surfaces de butée des deux paires de cales étant inclinées par rapport à la direction longitudinale du véhicule.

Le centrage relatif des deux éléments de toit est ainsi réalisé par l'inclinaison des surfaces de butée selon l'invention.

Lorsque les surfaces de butées respectives sont en contact, il est ainsi possible d'obtenir un centrage sans jeu.

Dans un mode de réalisation particulier de l'invention, les surfaces de butées arrières des premières cales sont dirigées vers l'extérieur et vers l'arrière, les surfaces avant des deuxièmes cales étant dirigées vers l'intérieur et vers l'avant.

Bien entendu un agencement contraire pourrait être prévu.

Par "avant" et "arrière", on se réfère bien entendu à l'avant et à l'arrière du véhicule.

Par "intérieur" on se réfère à une orientation vers le plan de symétrie de véhicule et par "extérieur" on se réfère à une orientation s'écartant de ce plan de symétrie.

Egalement dans un mode de réalisation particulier, les surfaces de butée son sensiblement planes.

Les surfaces de butée peuvent être disposées sensiblement symétriquement par rapport au plan de symétrie longitudinal du véhicule.

Les paires de cales peuvent notamment être disposées à proximité des bords latéraux des éléments de toit.

La présente invention a également pour objet un véhicule automobile comprenant un toit rigide repliable tel que décrit ci-dessus.

On décrira maintenant à titre d'exemple non limitatif un mode de réalisation particulier de l'invention en référence aux dessins schématiques annexés dans lesquels :
- la figure 1 est une vue de côté d'une partie de véhicule comportant un toit rigide repliable montré dans ses deux positons extrêmes de couverture de l'habitacle et de rangement dans le coffre ;
- la figure 2 est une vue de dessus du toit du véhicule de la figure 1 en position de fermeture de l'habitacle ;

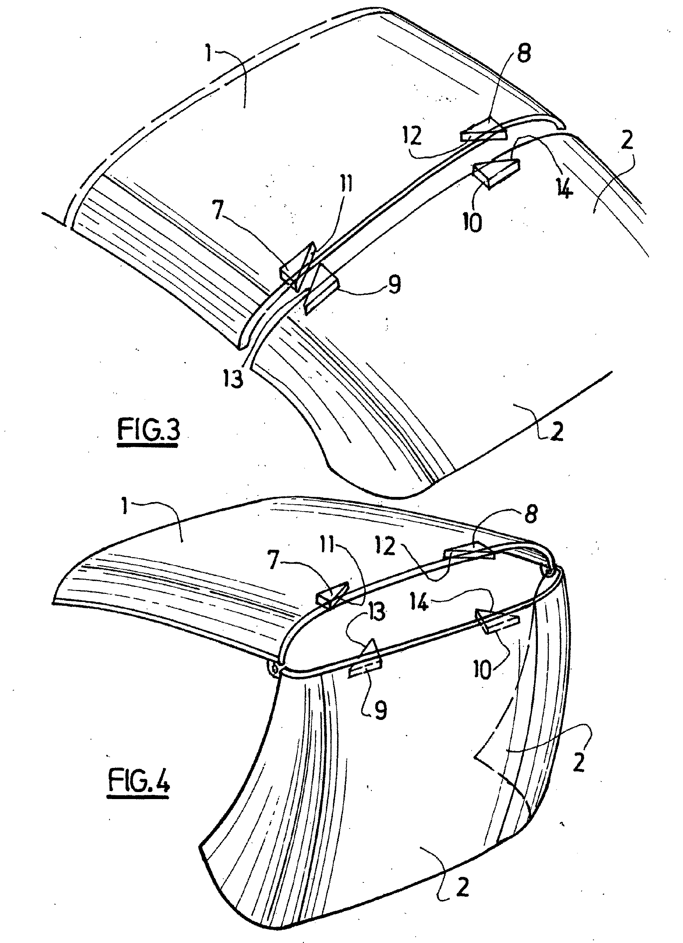

- la figure 3 est une vue similaire à la figure 2 en perspective et ;
- la figure 4 est une vue également en perspective du toit du véhicule en position intermédiaire.

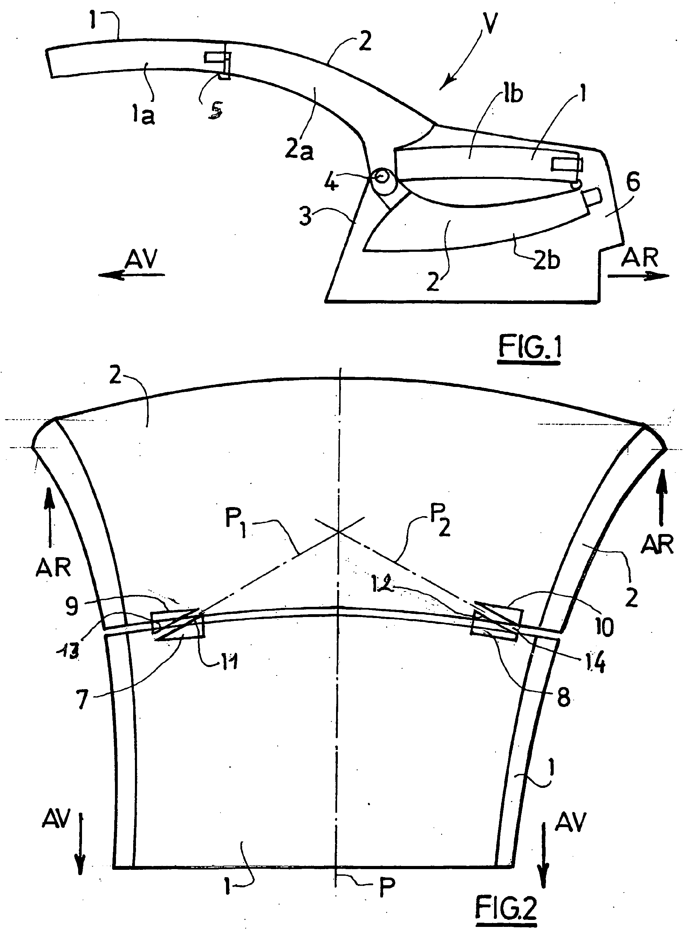

Le véhicule 1 de la figure 1 comporte un toit en deux éléments, à savoir un élément avant 1 et un élément arrière 2.

Le bord arrière de l'élément arrière 2 est articulé au châssis 3 du véhicule autour d'un axe 4 transversal au plan de symétrie P du véhicule.

Le bord arrière de l'élément avant 1 est articulé au bord avant de l'élément arrière 2 autour d'un axe 5 également perpendiculaire au plan de symétrie P.

Un système de biellette de type connu permet de synchroniser le mouvement de rotation de l'élément arrière 2 par rapport au châssis du véhicule et de l'élément avant 1 par rapport à l'élément arrière 2.

In est ainsi possible de replier le toit depuis une position 1a à 2a où il recouvre l'habitacle du véhicule avec le bord avant de l'élément 1 en contact avec le bord supérieur du pare-brise à une position 1, 2b où il est rangé dans le coffre arrière 6 du véhicule avec les deux éléments 1, 2 sensiblement horizontaux l'élément 1 étant disposé au-dessus de l'élément 2.

Deux cales 7 et 8 sont montées sur le bord arrière de l'élément 1 symétriquement par rapport au plan P et deux cales 9 et 10 sont montées sur le bord avant de l'élément 2 en vis-à-vis respectivement des cales 7 et 8.

Le matériau utilisé pour réaliser les cales est plus ou moins dur et adapté aux différentes contraintes de frottement, de bruit et de fiabilité.

Les cales peuvent être réalisées en acier, en aluminium, en matière composite ou toute autre matière.

Les cales 7 et 8 présentent des surfaces de butées arrières 11 et 12 respectivement tandis que les cales 9 et 10 présentent des surfaces de butée avant 13 et 14 respectivement.

Les surfaces de butées 11 et 13 respectivement 12 et 14 sont en contact lorsque le toit est dans sa position déployée au-dessus de l'habitacle du véhicule.

Les surfaces de butée 11-14 sont ici des surfaces planes généralement verticales lorsque le toit est dans sa position déployée et figurent dans des plans P1, P2 convergeant vers l'arrière du véhicule.

Par conséquent, les surfaces de butée 11, 12 sont orientées vers l'arrière du véhicule et vers l'extérieur tandis que les surfaces de butée 13 et 14 sont orientées vers l'avant du véhicule et vers l'intérieur.

Dans le mode de réalisation représenté, les surfaces de butée sont lisses.

En variante, au moins une des surfaces de butée 11, 13 et 12, 14 comprend des stries ce qui renforce le contact des surfaces de butées entre elles.

Les cales 7-10 sont montées de toute manière connue sur la structure des éléments 1 et 2 à proximité des bords latéraux de ces éléments.

Lorsque les éléments de toit 1 et 2 viennent en position de fermeture 1a, 2a, les surfaces de butée des cales assurent le centrage respectif des éléments et préviennent ainsi tout déplacement latéral d'un élément par rapport à l'autre.

Pour obtenir le centrage le plus précis possible, au moins une cale peut être réglable selon au moins une des directions de l'espace à l'aide de moyens connus.

On observera que l'invention a été décrite en relation avec un toit à deux éléments mais qu'elle peut s'appliquer à un toit comportant un nombre supérieur d'éléments et présentant une quelconque cinématique de déplacement des éléments.

## Revendications

1. Toit rigide de véhicule automobile, repliable d'une position où il recouvre l'habitacle du véhicule à une position où il est rangé dans le coffre du véhicule, comportant au moins deux éléments rigides adjacents longitudinalement, le bord arrière d'un premier élément (1) étant articulé au bord avant d'un deuxième élément (2), **caractérisé par le fait qu'**il comprend au moins deux paires de cales de centrage (7-10), une première cale (7, 8) étant montée au voisinage du bord arrière du premier élément (1) et la deuxième cale (9, 10) de chaque paire de cales étant montée au voisinage du bord avant du deuxième élément (2) en vis-à-vis de la première cale, la première cale de chaque paire de cales comportant une surface de butées arrières (11, 12) agencée pour coopérer avec une surface de butée avant (13, 14) de la deuxième cale lorsque le toit est dans sa position où il recouvre l'habitacle du véhicule, les surfaces de butée des deux paires de cales étant inclinées par rapport à la direction longitudinale P du véhicule.

2. Toit selon la revendication 1, **caractérisé par le fait que** les surfaces de butées arrières (11, 12) des premières cales (7, 8) sont dirigées vers l'extérieur et l'arrière, les surfaces de butées avant (13, 14) des deuxièmes cales (9, 10) étant dirigées vers l'intérieur et vers l'avant.

3. Toit selon l'une quelconque des revendications 1 et 2, **caractérisé par le fait que** les surfaces de butées (11-14) sont sensiblement planes.

4. Toit selon l'une quelconque des revendications 1 à 3, **caractérisé par le fait que** les surfaces de butées (11-14) sont disposées sensiblement symétriquement par rapport au plan de symétrie longitudinal P du véhicule.

5. Toit selon l'une quelconque des revendications 1 à 4, **caractérisé par le fait que** les paires de cales sont disposées à proximité des bords latéraux des éléments.

6. Véhicule automobile **caractérisé par le fait qu'**il comporte un toit selon l'une quelconque des revendications 1 à 5.

## Claims

1. A hard top of a motor vehicle, which can be folded from a position where it covers the passenger compartment of the vehicle to a position where it is stored in the vehicle trunk, including at least two longitudinally adjacent rigid elements, the rear edge of a first element (1) being hinged on the front edge of a second element (2), **characterised in that** it includes at least two pairs of positioning blocks (7 - 10), a first positioning block (7,8) being mounted close to the rear edge of the first element (1) and the second positioning block (9,10) of each pair of positioning blocks being mounted close to the front edge of the second element (2), opposite the first positioning block, the first positioning block of each pair of positioning blocks including a rear stops (11,12) surface arranged to cooperate with the front stops (13,14) surface of the second positioning block when the hard top is in the position where it covers the passenger compartment of the vehicle, the stops surfaces of both pairs of positioning blocks being inclined with respect to the longitudinal direction P of the vehicle.

2. A hard top according to claim 1, **characterised in that** the rear stops (11,12) surface of the first positioning blocks (7,8) are oriented outwards and backwards, the front stops (13,14) surface of the second positioning blocks (9,10) being oriented inwards and frontwards.

3. A hard top according to any one of claims 1 and 2, **characterised in that** the stops surfaces (11 - 14) are substantially plane.

4. A hard top according to any one of claims 1 to 3, **characterised in that** the stops surfaces (11 - 14) are positioned substantially symmetrically with respect to the longitudinal plane of symmetry P of the vehicle.

5. A hard top according to any one of claims 1 to 4, **characterised in that** the pairs of positioning blocks are positioned close to the side edges of the elements.

6. A motor vehicle, **characterised in that** it comprises a hard top according to any one of claims 1 to 5.

## Patentansprüche

1. Steifes Dach eines Kraftfahrzeugs, ab einer Position faltbar, in der es den Fahrgastraum des Fahrzeugs abdeckt, bis zu einer Position, in der es im Kofferraum untergebracht ist, das mindestens zwei steife längs anschließende Elemente umfaßt, wobei die hintere Kante eines ersten Elements (1) gelenkig mit der Vorderkante eines zweiten Elements (2) verbunden ist, **dadurch gekennzeichnet, daß** es mindestens zwei Paare von Zentrierkeilen (7 - 10) umfaßt, wobei ein erster Keil (7, 8) in der Nachbarschaft der hinteren Kante des ersten Elements (1) montiert ist, und der zweite Keil (9, 10) jedes Keilepaars in der Nachbarschaft der Vorderkante des zweiten Elements (2) gegenüber des ersten Keils montiert ist, wobei der erste Keil jedes Keilepaars, der ein Fläche mit hinteren Anschlägen (11, 12) umfaßt, die so gestaltet ist, daß sie mit einer vorderen Anschlagfläche (13, 14) des zweiten Keils zusammenwirkt, wenn das Dach in seiner Position ist, in der es den Fahrgastraum des Fahrzeugs abdeckt, wobei die Anschlagflächen der beiden Keilepaare gegenüber der Längsrichtung P des Fahrzeugs geneigt sind.

2. Dach nach Anspruch 1, **dadurch gekennzeichnet, daß** die hinteren Anschlagflächen (11, 12) der ersten Keile (7, 8) nach außen und nach hinten gerichtet sind, wobei die vorderen Anschlagflächen (13, 14) der zweiten Keile (9, 10) nach innen und nach vorne gerichtet sind.

3. Dach nach einem beliebigen der vorstehen den Ansprüche 1 und 2, **dadurch gekennzeichnet, daß** die Anschlagflächen -11 - 14) deutlich eben sind.

4. Dach nach einem beliebigen der vorstehen den Ansprüche 1 bis 3, **dadurch gekennzeichnet, daß** die Anschlagflächen (+11 - 14) deutlich symmetrisch im Verhältnis zur Längssymmetrieebene P des Fahrzeugs angeordnet sind.

5. Dach nach einem beliebigen der vorstehen den Ansprüche 1 bis 4, **dadurch gekennzeichnet, daß** die Keilepaare in der Nähe der seitlichen Kanten der Elemente angeordnet sind.

6. Fahrzeug **dadurch gekennzeichnet, daß** es ein Dach nach einem beliebigen der vorstehenden Ansprüche 1 bis 5 umfaßt.
